# EUROPÄISCHE PATENTANMELDUNG

(11) **EP 2 727 471 A1**
(43) Veröffentlichungstag der Anmeldung: **07.05.2014**
(21) Anmeldenummer: 13191524.1
(22) Anmeldetag: 05.11.2013
(51) Int. Cl.: A23G 1/21, A23G 1/22, A23G 3/34, A23G 3/02, A23G 3/20, A23G 3/54

(54) **Verfahren zur Herstellung eines Hohlkörpers mit stückigen Verzehrelementen aus einer formbaren, insbesondere kakaohaltigen Masse, sowie hierdurch hergestellter Hohlkörper**

(30) Priorität: 05.11.2012 DE 102012220070
(71) Anmelder: Brandt Zwieback-Schokoladen GmbH + Co. KG, 84030 Landshut (DE)
(72) Erfinder: Hofbauer, Rudi, 84036 Landshut (DE)
(74) Vertreter: Thun, Clemens

(57) **Zusammenfassung**

Die Erfindung betrifft ein Verfahren zur Herstellung eines Hohlkörpers (H') mit stückigen Verzehrelementen aus einer formbaren, insbesondere kakaohaltigen Masse unter Zuhilfenahme einer ersten Halbform und einer zweiten Halbform, sowie einen entsprechend hergestellten Hohlkörper. Das Verfahren weist die folgenden Schritte auf: a) Bereitstellen einer ersten Halbform, wobei die erste Halbform einen, Innenwandbereich aufweist, b) Aufbringen einer fließfähigen formbaren, insbesondere kakaohaltigen Masse auf dem Innenwandbereich der ersten Halbform zur Bildung einer Massenschicht, c) Verteilen der stückigen Verzehrelementen auf bzw. in der Massenschicht und d) Kühlen der Massenschicht, bis die Massenschicht zumindest im Wesentlichen nicht mehr fließfähig ist. Auf diese Weise lässt sich die Massenschicht und im Weiteren der Hohlkörper (H') ohne zu Klumpen angehäufte stückige Verzehrelemente erzeugen.

## Beschreibung

Die Erfindung betrifft ein Verfahren zur Herstellung eines Hohlkörpers mit stückigen Verzehrelementen aus einer formbaren, insbesondere kakaohaltigen Masse, sowie einen hierdurch hergestellten Hohlkörper.

Ein aus dem Stand der Technik bekanntes Verfahren zur Herstellung eines Hohlkörpers aus einer kakaohaltigen Masse in Form einer schokoladenhaltigen Masse umfasst die folgenden Herstellungsschritte:
i. Gießen einer Masse vorkristallisierter bzw. temperierter Schokolade in eine erste Halbform,
ii. Zusammensetzen der ersten Halbform mit einer zweiten Halbform,
iii. Anordnen von Halteelementen zum Halten der zweiten Halbform an der ersten Halbform,
iv. Allseitiges Drehen bzw. Schleudern der zusammengesetzten Halbformen zum gleichmäßigen Verteilen der Masse an den nach innen weisenden Wänden der beiden Halbformen,
v. Weiteres Drehen der zusammengesetzten Halbformen, während die Masse abkühlt und aufhört, zu fließen,
vi. Kühlen der beiden Halbformen, bis die Masse vollständig erstarrt ist,
vii. Öffnen der beiden Halbformen und
viii. Entnehmen der ausgehärteten Masse, durch die der fertiggestellte Hohlkörper gebildet ist.

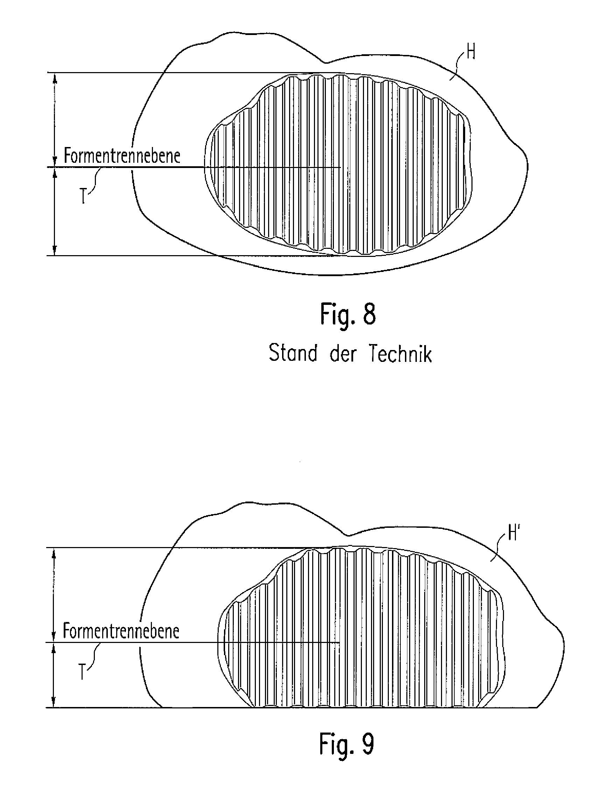

In Fig. 8 ist eine Ansicht von unten auf einen entsprechenden, durch die ausgehärtete Masse gebildeten Hohlkörper H aus Schokolade - nach Entfernen der beiden Halbformen - skizziert. Angedeutet ist dabei die Trennebene T, die die beiden Halbformen voneinander trennt, wenn diese den Hohlkörper H noch umgeben. Wenn bei dieser Herstellung eine schokoladenhaltige Masse verwendet wird, die stückige Bestandteile aufweist, beispielsweise in Form von Nüssen oder Nussstücken, kommt es bei Schritt iv. bzw. v. regelmäßig zu einer unkontrollierten Verklumpung der stückigen Bestandteile. Dies ist insbesondere der Fall, wenn die stückigen Bestandteile Durchmesser von ca. 1 cm oder mehr als 1 cm aufweisen. In der Regel ist es unerwünscht, wenn der fertige Hohlkörper Nussstück-Klumpen aufweist.

Der Erfindung liegt dementsprechend die Aufgabe zugrunde, ein entsprechendes Verfahren bzw. einen entsprechenden Hohlkörper anzugeben, bei dem sich eine Verklumpung der stückigen Bestandteile vermeiden lässt oder zumindest eine Verklumpungswahrscheinlichkeit verringert ist.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Verfahren zur Herstellung eines Hohlkörpers mit stückigen Verzehrelementen aus einer formbaren, insbesondere kakaohaltigen Masse unter Zuhilfenahme einer ersten Halbform und einer zweiten Halbform vorgesehen. Das Verfahren weist die folgenden Schritte auf:
a) Bereitstellen einer ersten Halbform, wobei die erste Halbform einen Innenwandbereich aufweist,
b) Aufbringen einer fließfähigen formbaren, insbesondere kakaohaltigen Masse auf dem Innenwandbereich der ersten Halbform zur Bildung einer Massenschicht,
c) Verteilen der stückigen Verzehrelemente auf bzw. in der Massenschicht und
d) Kühlen der Massenschicht, bis die Massenschicht zumindest im Wesentlichen nicht mehr fließfähig ist.

Auf diese Weise lässt sich eine Massenschicht und im Weiteren ein Hohlkörper erzeugen, in der die stückigen Verzehrelemente nicht zu Klumpen angehäuft sind. Der oben genannte Schritt c) wird dabei vorzugsweise durchgeführt, wenn sich die Schokoladenmassenschicht in einem fließfähigen Zustand befindet oder zumindest zähflüssig ist, so dass hierdurch die stückigen Verzehrelemente zumindest teilweise derart in die Schokoladenmassenschicht eindringen können, dass sie nach einem folgenden Härten der Schokoladenmassenschicht in dieser in ihren Lagen fixiert sind.

Vorzugsweise ist dabei der Innenwandbereich zumindest in erster Näherung plan oder konkav gewölbt. Insbesondere, wenn der Innenwandbereich zumindest in erster Näherung plan ist oder lediglich schwach gewölbt, lassen sich die stückigen Verzehrelemente in Schritt c) besonders einfach gleichmäßig verteilen.

Vorzugsweise weist der Innenwandbereich eine Fläche von wenigstens 4 cm² auf, besonders bevorzugt von wenigstens 6 cm², beispielsweise wenigstens 8 cm². Aufgrund der Größe der stückigen Verzehrelemente ist es zur Erzielung einer gleichmäßigen Verteilung vorteilhaft, wenn die Fläche eine gewisse, entsprechende Mindestgröße aufweist.

Vorzugsweise wird in Schritt b) zur Erzielung einer gleichmäßigen Dicke der Massenschicht die erste Halbform gerüttelt und/oder in Vibration versetzt. Hierdurch lässt sich in kurzer Zeit eine besonders gleichmäßige Dicke der Massenschicht erzielen.

Vorzugsweise weist die in Schritt b) gebildete Massenschicht eine Dicke zwischen 1 mm und 6 mm, vorzugsweise zwischen 2 mm und 4 mm auf. Dies hat sich insbesondere als vorteilhaft erwiesen, wenn die stückigen Verzehrelemente Durchmesser von ca. 1 cm oder mehr als 1 cm aufweisen.

Vorteilhaft wird in Schritt b) das Aufbringen der fließfähigen Masse manuell oder mittels Schminktechnologie durchgeführt.

Die stückigen Verzehrelemente umfassen vorzugsweise Nüsse und/oder Nussstücke und/oder Kekse und/oder Weichkaramell und/oder Popcorn und/oder Extruderprodukte. Insbesondere bestehen sie aus Nüssen und/oder Nussstücken und/oder Keksen und/oder Weichkaramell und/oder Popcorn und/oder Extruderprodukten.

Vorteilhaft wird in Schritt c) das Verteilen der stückigen Verzehrelemente manuell oder mittels einer Dosier-Einrichtung durchgeführt.

Eine besonders gleichmäßige Verteilung der stückigen Verzehrelemente auf bzw. in der Massenschicht innerhalb kurzer Zeit lässt sich erzielen, wenn in Schritt c) hierzu die Massenschicht gerüttelt und/oder in Vibration versetzt wird.

Eine besonders stabile Relativanordnung der stückigen Verzehrelemente in der Massenschicht bzw. in dem Hohlkörper lässt sich erzielen, wenn in Schritt d) die Massenschicht so lange gekühlt wird, bis die stückigen Verzehrelemente in der Massenschicht fixiert sind.

Vorzugsweise werden die genannten Schritte in der folgenden zeitlichen Reihenfolge durchgeführt: a), b), c) d).

Vorzugsweise weist das Verfahren weiterhin die folgenden Schritte auf: e) Einfüllen einer weiteren, fließfähigen formbaren, insbesondere kakaohaltigen Masse in die erste Halbform und/oder in die zweite Halbform und f) Zusammensetzen der ersten Halbform und der zweiten Halbform, wobei in der ersten Halbform die im Schritt d) gekühlte Massenschicht angeordnet ist und die weitere fließfähige formbare, insbesondere kakaohaltige Masse in einem zwischen der ersten Halbform und der zweiten Halbform gebildeten Hohlraum angeordnet ist. Hierdurch ist eine besonders einfache Erzeugung des Hohlkörpers ermöglicht. Weiterhin vorzugsweise erfolgt dabei in einem folgenden Schritt g) ein allseitiges Drehen und Kühlen der in Schritt f) zusammengesetzten Halbformen, bis die weitere formbare, insbesondere kakaohaltige Masse zumindest im Wesentlichen nicht mehr fließfähig ist.

Vorzugsweise weist in Schritt e) die zweite Halbform weitere stückige Verzehrelemente auf, die so verteilt sind, wie erfindungsgemäß mit Bezug auf die erste Halbform und die zuerst genannten stückigen Verzehrelemente vorgesehen. Auf diese Weise lässt sich erzielen, dass der Hohlkörper stückige Verzehrelemente aufweist, die über ein besonders großes Areal des Hohlkörpers verteilt angeordnet sind.

Gemäß einem weiteren Aspekt der Erfindung ist ein Hohlkörper, insbesondere in Form einer Hohlfigur aus einer insbesondere kakaohaltigen Masse vorgesehen, der nach einem erfindungsgemäßen Verfahren hergestellt ist.

Die Erfindung wird im Folgenden anhand eines Ausführungsbeispiels und mit Bezug auf die Zeichnungen näher erläutert. Es zeigen:
- Fig. 1: eine Querschnittskizze einer ersten Halbform zur Herstellung eines Hohlkörpers aus einer schokoladenhaltigen Masse,
- Fig. 2: die erste Halbform mit einer Schokoladenmassenschicht auf einem planen Innenwandbereich der ersten Halbform,
- Fig. 3: ein Zugeben von stückigen Verzehrelementen zu der Schokoladenmassenschicht,
- Fig. 4: die erste Halbform mit den, in der Schokoladenmassenschicht gleichmäßig verteilten stückigen Verzehrelemente,
- Fig. 5: die erste Halbform, wie in Fig. 4 gezeigt, jedoch mit einer zweiten Halbform und einer in Letzterer eingefüllten weiteren Schokoladenmasse,
- Fig. 6: die beiden Halbformen in zusammengesetztem Zustand,
- Fig. 7: die beiden zusammengesetzten Halbformen nach allseitigem Drehen zum Verteilen der weiteren Schokoladenmasse,
- Fig. 8: einen Hohlkörper nach dem Stand der Technik,
- Fig. 9: einen Hohlkörper, der nach einem erfindungsgemäßen Verfahren hergestellt ist und
- Figuren 10 bis 13: den Figuren 1 bis 4 entsprechende Figuren, die eine Variation mit einer ersten Halbform mit konkav gewölbtem Innenwandbereich zeigen.

Das erfindungsgemäße Verfahren dient zur Herstellung eines Hohlkörpers mit stückigen Verzehrelementen aus einer formbaren, insbesondere aus einer formbaren kakaohaltigen Masse. Bei der Masse kann es sich beispielsweise um eine Schokoladenmasse handeln. Im Folgenden wird das Verfahren am Beispiel einer Schokoladenmasse erläutert, dies ist jedoch ohne Beschränkung. Es kann sich also allgemein um eine formbare Masse handeln, insbesondere um eine kakaohaltige Masse. Analoges gilt auch mit Bezug auf die weiter unten genannte "weitere fließfähige Schokoladenmasse".

Bei dem Hohlkörper kann es sich insbesondere um eine Hohlfigur handeln. Die schokoladenhaltige Masse kann insbesondere stückige Verzehrbestandteilen bzw. Verzehrelemente enthalten, wie insbesondere Nussstücke und/oder Nüsse und/oder Kekse und/oder sonstige Backwaren und/oder Weichkaramell und/oder Popcorn und/oder Extruderprodukte und/oder Geleeprodukte u. s. w.

Das Verfahren wird unter Zuhilfenahme einer ersten Halbform und einer zweiten Halbform durchgeführt. Die beiden Halbformen lassen sich so zusammensetzen, dass sie einen zumindest im Wesentlichen geschlossenen Innenraum bilden, in dem die Masse eingeschlossen werden kann.

Das erfindungsgemäße Verfahren dient insbesondere dazu, den Hohlkörper herzustellen, ohne dass dabei stückige Verzehrelemente verklumpen.

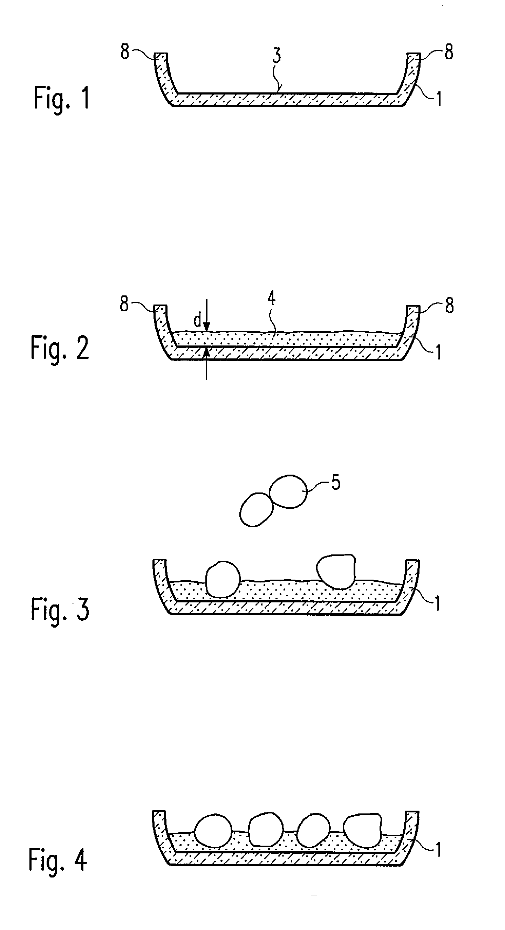

Hierzu wird zunächst in einem Schritt a) - wie in Fig. 1 exemplarisch im Querschnitt skizziert - eine erste Halbform 1 bereitgestellt, wobei die erste Halbform 1 einen, Innenwandbereich 3 aufweist, der bei dem hier gezeigten Beispiel zumindest in erster Näherung plan gestaltet ist. Der plane Innenwandbereich 3 weist dabei vorzugsweise eine Fläche auf, die wenigstens 4 cm² beträgt, insbesondere wenigstens 6 cm², besonders bevorzugt wenigstens 8 cm².

Die erste Halbform 1 wird vorteilhaft derart ausgerichtet, dass die Fläche des planen Innenwandbereichs 3 horizontal orientiert ist und die Flächennormale der Fläche nach oben weist. Vorzugsweise weist die erste Halbform 1 weiterhin eine, sich von dem Rand des Innenwandbereichs 3 nach oben oder schräg nach oben erstreckende Wandung 8 auf, die entlang des Rands ringförmig geschlossen bzw. ununterbrochen ausgebildet ist. Vorzugsweise beträgt - bei der genannten Orientierung - die vertikale Erstreckung der Wandung 8 an allen Stellen mindestens 3 mm, insbesondere mindestens 4 mm, beispielsweise ca. 1 cm.

Anschließend wird in einem Schritt b) - wie in Fig. 2 skizziert - eine fließfähige, insbesondere schmelzflüssige Schokoladenmasse auf dem planen Innenwandbereich 3 aufgebracht. Die Wandung 8 der ersten Halbform 1 ist vorzugsweise derart gestaltet, dass sie eine allseits seitliche Begrenzung für die fließfähige Schokoladenmasse bildet. Das Aufbringen dient zur Bildung einer Schokoladenmassenschicht 4. Vorzugsweise ist vorgesehen, dass zur Erzielung einer gleichmäßigen Dicke der Schokoladenmassenschicht die erste Halbform 1 gerüttelt und/oder in Vibration versetzt wird.

Vorzugsweise weist die so gebildete Schokoladenmassenschicht 4 eine Dicke d auf, die zwischen 1 mm und 6 mm beträgt, insbesondere zwischen 2 mm und 4 mm, beispielsweise etwa 3 mm. Es wird also quasi ein "Schokoladenbett" gebildet.

Vorzugsweise wird in Schritt b) das Aufbringen der fließfähigen Schokoladenmasse 4 manuell oder mittels Schminktechnologie durchgeführt. Bei der Schminktechnologie handelt es sich allgemein um ein, mittels Roboter automatisiertes Dekorieren, insbesondere von Schokoladenfiguren mit unterschiedlichen Schokoladensorten.

Anschließend werden in einem Schritt c) - wie in Fig. 3 skizziert - stückige Verzehrelemente 5 auf bzw. in der Schokoladenmassenschicht 4 verteilt. Dabei kann es sich insbesondere um die oben bereits erwähnten stückigen Verzehrelemente 5 handeln, die insbesondere Nüsse und/oder Nussstücke und/oder Kekse und/oder Weichkaramell und/oder Popcorn und/oder Extruderprodukte etc. umfassen oder aus solchen bestehen. Vorzugsweise wird Schritt c) durchgeführt, wenn sich die Schokoladenmassenschicht 4 in einem fließfähigen Zustand befindet oder zumindest zähflüssig ist, so dass hierdurch die stückigen Verzehrelemente 5 zumindest teilweise derart in die Schokoladenmassenschicht 4 eindringen können, dass sie nach einem folgenden Härten der Schokoladenmassenschicht 4 in dieser in ihren Lagen fixiert sind.

Vorzugsweise wird in Schritt c) das Verteilen der stückigen Verzehrelemente 5 manuell oder mittels einer Dosier-Einrichtung durchgeführt. Insbesondere werden die stückigen Verzehrelemente 5 gleichmäßig verteilt, so dass sie jedenfalls nicht zu Klumpen angehäuft sind. Beispielsweise können die stückigen Verzehrelemente 5 derart auf bzw. in der Schokoladenmassenschicht 4 verteilt werden, dass sie jeweils einen horizontalen Abstand voneinander aufweisen.

Ebenfalls vorzugsweise wird in Schritt c) zur Erzielung einer besonders gleichmäßigen Verteilung der stückigen Verzehrelemente 5 die Schokoladenmassenschicht 4 gerüttelt und/oder in Vibration versetzt, während sich die Schokoladenmassenschicht 4 in einem fließfähigen oder zumindest zähflüssigen Zustand befindet.

In Fig. 4 ist der Zustand skizziert, in dem die stückigen Verzehrelemente 5 gleichmäßig verteilt in bzw. auf der Schokoladenmassenschicht 4 verteilt angeordnet sind.

Um eine besonders gleichmäßige Verteilung der stückigen Verzehrelemente 5 vorteilhaft zu ermöglichen, wird der Schritt c) vorzugsweise durchgeführt, solange sich die Schokoladenmassenschicht 4 mit Bezug auf ihre Fließfähigkeit bzw. Zähflüssigkeit noch in demselben Zustand wie in Schritt a) befindet oder zumindest noch nicht hart geworden ist, also insbesondere ohne ein Hartwerden der Schokoladenmassenschicht 4 zwischen den Schritten b) und c).

Anschließend wird in einem Schritt d) die Schokoladenmassenschicht 4 gekühlt, bis die Schokoladenmassenschicht 4 zumindest im Wesentlichen nicht mehr fließfähig ist. Insbesondere wird in Schritt d) die Schokoladenmassenschicht 4 so lange gekühlt, bis die stückigen Verzehrelemente 5 in der Schokoladenmassenschicht 4 fixiert sind, also ihre Lagen bzw. Positionen zueinander nicht mehr verändern. Insbesondere wird in Schritt d) die Schokoladenmassenschicht 4 gekühlt, bis sie hart geworden ist.

Auf diese Weise lässt sich insbesondere vermeiden, dass sich die stückigen Verzehrelemente 5 im Weiteren zu Klumpen anhäufen.

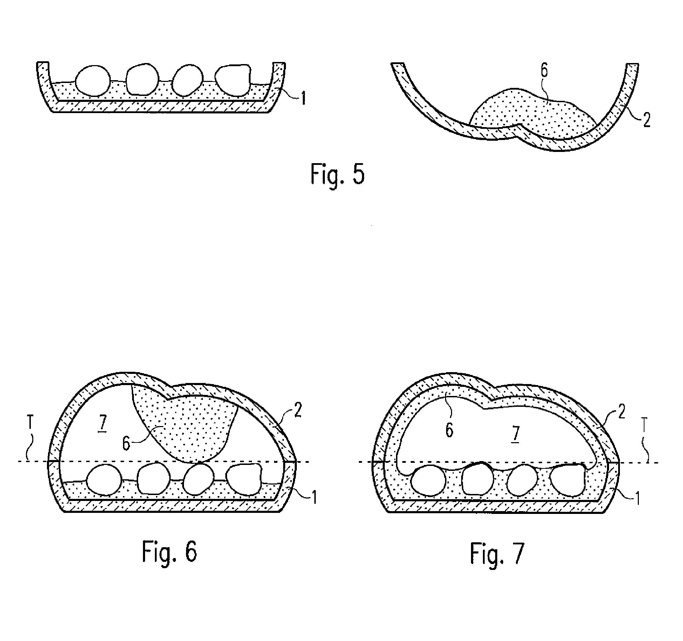

Besonders geeignet lässt sich zur Herstellung des Hohlkörpers - wie in Fig. 5 skizziert - anschließend der folgende Schritt e) ausführen: Einfüllen einer weiteren, fließfähigen Schokoladenmasse 6 in die erste Halbform 1 und/oder in die zweite Halbform 2. Insbesondere kann die weitere Schokoladenmasse 6 temperiert bzw. vorkristallisiert oder schmelzflüssig sein. In Fig. 5 ist das Einfüllen der weiteren fließfähigen Schokoladenmasse 6 in die zweite Halbform 2 skizziert.

Anschließend wird vorteilhaft der folgende Schritt f) ausgeführt: Zusammensetzen der ersten Halbform 1 und der zweiten Halbform 2, wobei in der ersten Halbform 1 die im Schritt d) gekühlte Schokoladenmassenschicht 4 mit den darin bzw. daran fixierten stückigen Verzehrelementen 5 angeordnet ist. Die weitere fließfähige Schokoladenmasse 6 ist in einem zwischen der ersten Halbform 1 und der zweiten Halbform 2 gebildeten Hohlraum 7 angeordnet. Vorzugsweise werden die beiden Halbformen 1, 2 - wie an sich aus dem Stand der Technik bekannt - durch Zusammenhaltemittel, beispielsweise Klammern oder Magnethalter - zusammengehalten.

Weiterhin vorzugsweise erfolgt dann anschließend in einem Schritt g) ein allseitiges Drehen bzw. Schleudern und Kühlen der in Schritt f) zusammengesetzten Halbformen 1, 2, bis die weitere Schokoladenmasse 6 zumindest im Wesentlichen nicht mehr fließfähig ist, insbesondere hart geworden ist. Es kann dabei vorgesehen sein, dass im Schritt f) zunächst lediglich das Drehen erfolgt und dann anschließend ein weiteres Drehen und gleichzeitiges Kühlen der beiden Halbformen.

In Fig. 7 ist der Zustand skizziert, in dem die weitere Schokoladenmasse 6 entsprechend formstabil ist. Die stückigen Verzehrelemente 5 sind nach wie vor in ihrer Relativanordnung fixiert. Die stückigen Verzehrelemente 5 können dabei von der weiteren Schokoladenmasse 6 zumindest teilweise ummantelt bzw. bedeckt sein. Vorzugsweise wird das Verfahren in den Schritten e), f) und g) durch entsprechende Wahl der Massen- und Temperaturverhältnisse so gestaltet, dass die weitere fließfähige Schokoladenmasse 6 nicht so warm ist, dass hierdurch die Schokoladenmassenschicht 4 schmilzt. Die Temperatur der weiteren, fließfähigen Schokoladenmasse 6 wird also vorzugsweise so gewählt, dass die Schokoladenmassenschicht 4 während der genannten Schritte hierdurch nicht schmilzt oder allenfalls lediglich marginal schmilzt, um sicherzustellen, dass die Relativanordnung der stückigen Verzehrelemente 5 zumindest im Wesentlichen erhalten bleibt.

Anschließend können die beiden Halbformen 1, 2 wieder voneinander gelöst werden und es kann der - in Fig. 9 exemplarisch skizzierte - fertiggestellte Hohlkörper H' aus den Halbformen herausgelöst werden.

Mit dem erfindungsgemäßen Verfahren lässt sich also insbesondere erzielen, dass der Hohlkörper keine zu Klumpen angehäuften stückigen Verzehrelemente aufweist.

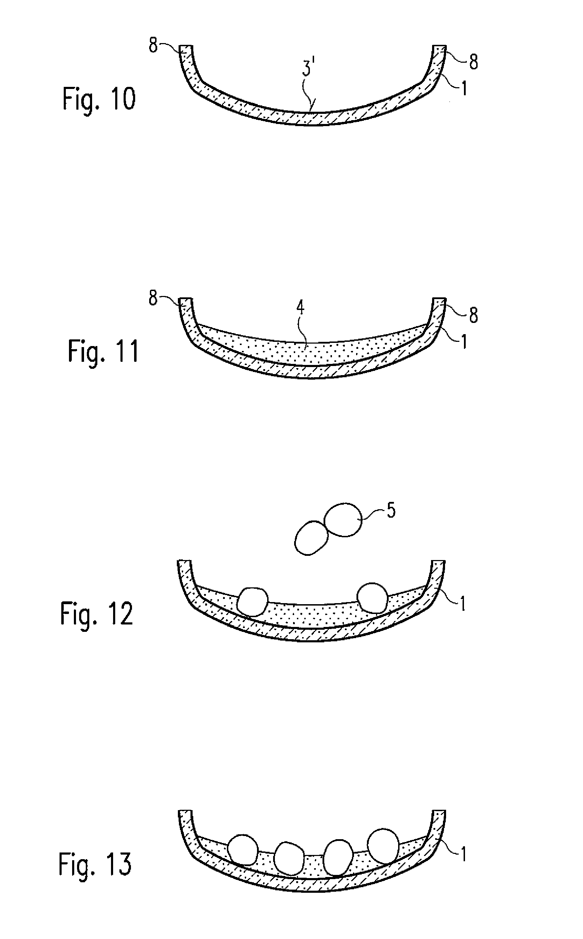

In den Figuren 10 bis 13 ist in Analogie zu den Figuren 1 bis 4 eine Variante skizziert, bei der der Innenwandbereich 3' der ersten Halbform 1 konkav gewölbt ausgestaltet ist. Auch in einem solchen Fall eignet sich das erfindungsgemäße Verfahren, wenngleich sich in diesem Fall die Massenschicht 4 mit einer gewissen Wahrscheinlichkeit so ausbildet, dass sie in einer Mitte eine größere Dicke aufweist, als an ihren Rändern, wie in Fig. 11 angedeutet.

Außerdem ist in diesem Fall zu berücksichtigen, dass die stückigen Verzehrelemente 5 aufgrund des unebenen Innenwandbereichs 3' durch Einwirkung der Schwerkraft ihre Positionen verändern können, wenn die Massenschicht 4 nicht genügend ausgehärtet ist. Daher ist in diesem Fall darauf zu achten, dass die stückigen Verzehrelemente 5 erst auf bzw. in der Massenschicht 4 verteilt angeordnet werden, wenn die Massenschicht 4 bereits entsprechend weit gehärtet ist.

Vorzugsweise ist der Innenwandbereich 3' dementsprechend lediglich schwach gekrümmt gestaltet, beispielsweise mit einem Krümmungsradius der größer als 3 cm ist, vorzugsweise größer als 5 cm.

Insbesondere im Fall der Variante mit dem konkav gekrümmten Innenwandbereich 3' kann vorgesehen sein, dass in Schritt e) die zweite Halbform 2 weitere stückige Verzehrelemente (in den Figuren nicht gezeigt) aufweist, die so verteilt sind, wie oben mit Bezug auf die erste Halbform 1 und die zuerst genannten stückigen Verzehrelemente 5 beschrieben. Auf diese Weise lässt sich erzielen, dass der Hohlkörper stückige Verzehrelemente aufweist, die über ein besonders großes Areal des Hohlkörpers verteilt angeordnet sind.

## Patentansprüche

1. Verfahren zur Herstellung eines Hohlkörpers mit stückigen Verzehrelementen (5) aus einer formbaren, insbesondere kakaohaltigen Masse, unter Zuhilfenahme einer ersten Halbform (1) und einer zweiten Halbform (2), aufweisend die Schritte:
a) Bereitstellen der ersten Halbform (1), wobei die erste Halbform (1) einen Innenwandbereich (3) aufweist,
b) Aufbringen einer fließfähigen formbaren, insbesondere kakaohaltigen Masse auf dem Innenwandbereich (3) der ersten Halbform (1) zur Bildung einer Massenschicht (4),
c) Verteilen der stückigen Verzehrelemente (5) auf bzw. in der Massenschicht (4) und
d) Kühlen der Massenschicht (4), bis die Massenschicht (4) zumindest im Wesentlichen nicht mehr fließfähig ist.

2. Verfahren nach Anspruch 1,
wobei Schritt c) durchgeführt wird, wenn sich die Schokoladenmassenschicht (4) in einem fließfähigen Zustand befindet oder zumindest zähflüssig ist, so dass hierdurch die stückigen Verzehrelemente (5) zumindest teilweise derart in die Schokoladenmassenschicht (4) eindringen können, dass sie nach einem folgenden Härten der Schokoladenmassenschicht (4) in dieser in ihren Lagen fixiert sind.

3. Verfahren nach Anspruch 1 oder 2,
bei dem der Innenwandbereich (3) zumindest in erster Näherung plan oder konkav gewölbt ist.

4. Verfahren nach einem der vorherigen Ansprüche,
bei dem der Innenwandbereich (3) eine Fläche von wenigstens 4 cm² aufweist, vorzugsweise von wenigstens 6 cm², besonders bevorzugt von wenigstens 8 cm².

5. Verfahren nach einem der vorhergehenden Ansprüche,
bei dem in Schritt b) zur Erzielung einer gleichmäßigen Dicke der Massenschicht (4) die erste Halbform (1) gerüttelt wird und/oder in Vibration versetzt wird.

6. Verfahren nach einem der vorhergehenden Ansprüche,
bei dem die in Schritt b) gebildete Massenschicht (4) eine Dicke (*d*) zwischen 1 mm und 6 mm, vorzugsweise zwischen 2 mm und 4 mm aufweist.

7. Verfahren nach einem der vorhergehenden Ansprüche,
bei dem in Schritt b) das Aufbringen der fließfähigen Masse manuell oder mittels Schminktechnologie durchgeführt wird.

8. Verfahren nach einem der vorhergehenden Ansprüche,
bei dem die stückigen Verzehrelemente (5) Nüsse und/oder Nussstücke und/oder Kekse und/oder Weichkaramell und/oder Popcorn und/oder Extruderprodukte umfassen, vorzugsweise aus Nüssen und/oder Nussstücken und/oder Keksen und/oder Weichkaramell und/oder Popcorn und/oder Extruderprodukten bestehen.

9. Verfahren nach einem der vorhergehenden Ansprüche,
bei dem in Schritt c) das Verteilen der stückigen Verzehrelemente (5) manuell oder mittels einer Dosier-Einrichtung durchgeführt wird.

10. Verfahren nach einem der vorhergehenden Ansprüche,
bei dem in Schritt c) zur Erzielung einer gleichmäßigen Verteilung der stückigen Verzehrelemente (5) die Massenschicht (4) gerüttelt und/oder in Vibration versetzt wird.

11. Verfahren nach einem der vorhergehenden Schritte,
bei dem in Schritt d) die Massenschicht (4) so lange gekühlt wird, bis die stückigen Verzehrelemente (5) in der Massenschicht (4) fixiert sind.

12. Verfahren nach einem der vorhergehenden Schritte,
bei dem die genannten Schritte in der folgenden zeitlichen Reihenfolge durchgeführt werden: a), b), c) d).

13. Verfahren nach einem der vorhergehenden Ansprüche,
weiterhin aufweisend die folgenden Schritte:
e) Einfüllen einer weiteren, fließfähigen formbaren, insbesondere kakaohaltigen Masse (6) in die erste Halbform (1) und/oder in die zweite Halbform (2),
f) Zusammensetzen der ersten Halbform (1) und der zweiten Halbform (2), wobei in der ersten Halbform (1) die im Schritt d) gekühlte Massenschicht (4) angeordnet ist und die weitere fließfähige formbare, insbesondere kakaohaltige Masse (6) in einem zwischen der ersten Halbform (1) und der zweiten Halbform (2) gebildeten Hohlraum (7) angeordnet ist,
wobei das Verfahren vorzugsweise weiterhin den folgenden Schritt aufweist:
g) allseitiges Drehen und Kühlen der in Schritt f) zusammengesetzten Halbformen, bis die weitere formbare, insbesondere kakaohaltige Masse (6) zumindest im Wesentlichen nicht mehr fließfähig ist.

14. Verfahren nach Anspruch 13,
bei dem in Schritt e) die zweite Halbform (2) weitere stückige Verzehrelemente aufweist, die so verteilt sind, wie in einem der Ansprüche 1 bis 11 mit Bezug auf die erste Halbform (1) und die zuerst genannten stückigen Verzehrelemente (5) beschrieben.

15. Hohlkörper (H'), insbesondere in Form einer Hohlfigur, aus einer insbesondere kakaohaltigen Masse, hergestellt nach einem Verfahren nach einem der Ansprüche 1 bis 14.
